# EUROPÄISCHE PATENTSCHRIFT

(11) **EP 3 953 743 B1**
(45) Veröffentlichungstag und Bekanntmachung des Hinweises auf die Patenterteilung: **09.11.2022**
(21) Anmeldenummer: 20726275.9
(22) Anmeldetag: 10.04.2020
(51) Int. Cl.: G01V 8/10, G05B 19/418

(54) **FERTIGUNGSVORRICHTUNG UND FÖRDERMITTEL**
MANUFACTURING DEVICE AND CONVEYOR MEANS
DISPOSITIF DE FABRICATION ET MOYEN DE TRANSPORT

(30) Priorität: 11.04.2019 AT 503302019
(43) Veröffentlichungstag der Anmeldung: 16.02.2022
(73) Patentinhaber: TRUMPF Maschinen Austria GmbH & Co. KG., 4061 Pasching (AT)
(72) Erfinder: KIRCHMAYR, Gerhard, 4060 Leonding (AT)
(74) Vertreter: Burger, Hannes
(86) Internationale Anmeldenummer: PCT/AT2020/060144
(87) Internationale Veröffentlichungsnummer: WO 2020/206478

(56) Entgegenhaltungen:
- WO-A1-2015/200450
- WO-A1-2017/182486
- DE-A1- 10 005 841
- US-A1- 2018 043 547
- US-B2- 8 886 390

## Beschreibung

Die Erfindung betrifft eine Fertigungsvorrichtung mit einer Fertigungszelle zur Bearbeitung von Werkstücken und einem fahrerlosen Transportfahrzeug zur Beförderung der Werkstücke und zum Beschicken der Fertigungszelle mit den zu bearbeitenden Werkstücken und ein Verfahren entsprechend dem Oberbegriff des Anspruches 1 und 8.

Neben der Bearbeitung von Werkstücken in industriellen Produktionsanlagen durch automatisiert arbeitende Fertigungsmaschinen und deren Bedienung durch Industrieroboter ist es vielfach auch üblich, die Teilebereitstellung der Werkstücke als auch deren Abtransport durch sogenannte fahrerlose Transportsysteme (FTS) durchzuführen. Dabei handelt es sich um innerbetriebliche, flurgebundene Fördersysteme mit automatisch gesteuerten Fahrzeugen, deren primäre Aufgabe der Materialtransport ist. Ein solches FTS umfasst dabei ein oder mehrere fahrerlose Transportfahrzeuge (FTF), eine Leitsteuerung, Einrichtungen zur Standortbestimmung und Lagererfassung, zur Datenübertragung sowie Infrastruktur und periphere Einrichtungen. Als fahrerlose Transportfahrzeuge sind flurgebundene Fördermittel mit einem Fahrantrieb, die automatisch gesteuert und berührungslos geführt werden, vorgesehen. Mit solchen FTF kann der Materialtransport durch Ziehen oder Tragen von Fördergut mit aktiven oder passiven Lastaufnahmemitteln erfolgen. Die fahrerlosen Transportfahrzeuge können beispielsweise ähnlich einem Gabelhubwagen oder einem Stapler ausgeführt sein. Zur Gewährleistung der Sicherheit des Arbeitspersonals müssen die FTF auch mit Personenerkennungssystemen ausgerüstet sein. Andererseits sind die Fertigungszellen solcher Produktionsanlagen durch Schutzabtrennungen, beispielsweise durch einen Schutzzaun, gesichert. Durch eine solche Schutzabtrennung die eine Begrenzung der Fertigungszelle bildet, wird verhindert, dass Personen, die sich in der Nähe aufhalten, durch in Betrieb befindliche Bearbeitungsmaschinen bzw. durch Roboter verletzt werden können. Bedienpersonal kann aber auch außerhalb der Fertigungszelle einer Gefährdung ausgesetzt sein. Zu solchen Gefährdungssituationen kann es insbesondere kommen, wenn durch ein fahrerloses Transportfahrzeug Material zu der Fertigungszelle gebracht wird oder wenn bearbeitete Teile abtransportiert werden und dazu durch eine Schleuse in dem Schutzzaun hindurch Werkstücke zugeführt und abgestellt werden oder von dort wieder aufgenommen und fortbewegt werden. Sollte sich eine Bedienperson im Nahbereich bzw. vor der Schleuse in der Schutzabtrennung der Fertigungszelle aufhalten, wenn sich das fahrerlose Transportfahrzeug mit seinem Lastaufnahmemittel gerade der Schleuse annähert, so könnte dabei die Bedienperson eingeklemmt und verletzt werden. Zumindest könnte in einer solchen Situation der ordnungsgemäße und sichere Betrieb der Anlage gestört werden.

Das Dokument WO 2017/182486 beschreibt eine Fertigungsvorrichtung und ein Verfahren gemäß den Oberbegriffen der Ansprüche 1 und 8 und eine Fertigungsstation mit einem Fördermittel zum Transport von Werkstücken und einer Fertigungszelle mit einer Schutzabtrennung, wobei die Schutzabtrennung eine Schleuse aufweist. Durch diese Schleuse werden die Werkstücke mittels fahrerlosen Transportfahrzeugen in die Fertigungszelle gebracht. An den Öffnungen - jeweils am Beginn und am Ende - der Schleuse sind Lichtschrankenanordnungen ausgebildet, mittels derer der Durchgang der Fördermittel durch die beiden Öffnungen der Schleuse überwacht wird. An den Öffnungen ist jeweils an einer Seite ein Sender und an der gegenüberliegenden Seite ein Empfänger des Lichtschrankens angeordnet.

Das Dokument DE 100 05 841 A1 beschreibt eine Schutzeinrichtung für das Be- und Entladen von LKW's an Überladebrücken. Dabei wird ein vorgegebener Raum mit Lichtgittern oder mit ähnlichen Sensoren überwacht. Abhängig von der jeweiligen relativen Situation des Fahrzeugs beim Einfahren bzw. wieder Ausfahren in Bezug auf den Bereich der Überladebrücke werden dabei Lichtgitter selektiv ein- bzw. wieder ausgeschaltet.

In dem Dokument WO2015200450 wird eine Sicherungseinrichtung für Lastwagen-Verladeplätze beschrieben. Mittels geeigneter Sensoren (z.B. Laser, Ultraschall) wird dabei der Verladeplatz zwischen dem Fahrzeug und einer Toreinfahrt abgetastet und die Anwesenheit einer Person in dem kritischen Bereich detektiert.

Die Aufgabe der Erfindung ist es daher, eine Fertigungsvorrichtung zu schaffen, durch die die Personensicherheit mit einer höheren Zuverlässigkeit gewährleistet werden kann und bei der Störungen des in der Fertigungszelle ablaufenden Fertigungsprozesses, die durch die automatisiert erfolgende Anlieferung von Werkstücken oder deren Abtransport hervorgerufen werden könnten, möglichst vermieden werden können.

Diese Aufgabe wird durch eine Fertigungsvorrichtung gemäß Anspruch 1, mit einer Fertigungszelle zum Bearbeiten von Werkstücken, mit einer seitlich umlaufenden, eine Begrenzung der Fertigungszelle bildenden Schutzabtrennung, wobei in der Schutzabtrennung eine Schleuse zur Durchführung eines Verladevorgangs der Werkstücke ausgebildet ist, gelöst. Dabei ist an einer Öffnung der Schleuse eine erste Lichtschrankenanordnung mit einem ersten Sender und mit einem dem ersten Sender zugeordneten, ersten Empfänger ausgebildet und ist ein fahrerloses Fördermittel mit einem Lastaufnahmemittel zur Beförderung der Werkstücke vorgesehen. Zur Durchführung des Verladevorgangs sind zwischen dem Fördermittel und der Schleuse eine zweite Lichtschrankenanordnung und eine dritte Lichtschrankenanordnung ausgebildet, sodass das Lastaufnahmemittel und die Werkstücke von der zweiten Lichtschrankenanordnung und von der dritten Lichtschrankenanordnung an einander gegenüberliegenden Seiten seitlich begrenzt sind. Diese Ausbildung der Fertigungsvorrichtung hat den Vorteil, dass damit der Aufbau einer temporär einsetzbaren Sicherungseinrichtung möglich ist.

Vorteilhaft ist auch, dass während der Durchführung des Verladevorgangs ein mit einer Abstellzone der Schleuse für die Werkstücke zusammenhängender Bereich von dem Fördermittel, von der zweiten Lichtschrankenanordnung und von der dritten Lichtschrankenanordnung seitlich begrenzt ist, da dadurch während des Ablaufs des Transfers von Werkstücken in die Fertigungszelle hinein oder daraus heraus die Schutzzone der Fertigungszelle und die Schutzzone des Fördermittels zu einer einzigen zusammenhängenden Schutzzone verbunden und überwacht werden können.

Gemäß einer Weiterbildung ist vorgesehen, dass das Fördermittel eine Steuervorrichtung umfasst, wobei die Steuervorrichtung dazu ausgebildet ist, die zweite Lichtschrankenanordnung und/oder die dritte Lichtschrankenanordnung bedarfsweise, programmgesteuert zu aktivieren und zu deaktivieren. Dies hat den Vorteil, dass Komponenten der Schleuse, die für die Durchführung eines Verladevorgangs benötigt werden, inaktiv bleiben können solange bis ein Fördermittel bei der Schleuse eintrifft und einen Verladevorgang startet.

Vorteilhafterweise umfasst die Schleuse eine Steuervorrichtung, wobei die Steuervorrichtung dazu ausgebildet ist, die erste Lichtschrankenanordnung vor der Schleuse bedarfsweise, programmgesteuert zu aktivieren und zu deaktivieren.

Die Weiterbildung der Fertigungsvorrichtung, wonach die Steuervorrichtung des Fördermittels und die Steuervorrichtung der Schleuse dazu ausgebildet sind, gemeinsam die zweite Lichtschrankenanordnung und die dritte Lichtschrankenanordnung programmgesteuert zu überwachen, hat den Vorteil, dass der Ablauf des Verladevorgangs lokal, d.h. unabhängig von der übergeordneten Steuervorrichtung der Fertigungszelle als auch unabhängig von der zentralen Steuervorrichtung der gesamten Fertigungsvorrichtung, organisiert und durchgeführt werden kann.

Erfindungsgemäß ist vorgesehen, dass die zweite Lichtschrankenanordnung einen zweiten Sender, der an dem Fördermittel befestigt ist, und einen zweiten Empfänger, der an der Schleuse befestigt ist, umfasst, und dass die dritte Lichtschrankenanordnung einen dritten Sender, der an der Schleuse befestigt ist, und einen dritten Empfänger, der an dem Fördermittel befestigt ist, umfasst.

Die Fertigungsvorrichtung ist in einer Weiterbildung derart ausgebildet, dass die zweite Lichtschrankenanordnung zur Übertragung einer Nachricht von der Steuervorrichtung des Fördermittels an die Steuervorrichtung der Schleuse ausgebildet ist, und dass die dritte Lichtschrankenanordnung zur Übertragung einer Nachricht von der Steuervorrichtung der Schleuse an die Steuervorrichtung des Fördermittels ausgebildet ist. Dies hat den Vorteil, dass damit eine direkte Kommunikation zwischen dem Fördermittel und der Schleuse der Fertigungszelle möglich ist, ohne dass dazu ein Nachrichtenaustausch mit der übergeordneten Steuervorrichtung der Fertigungszelle noch mit der zentralen Steuervorrichtung der gesamten Fertigungsvorrichtung erfolgen muss.

Vorteilhaft ist auch die Ausbildung der Fertigungsvorrichtung, wonach das Fördermittel einen Detektor zur Ausbildung eines Überwachungsbereichs umfasst, wobei der Überwachungsbereich eine gemeinsame räumliche Ausdehnung des Lastaufnahmemittels und der Werkstücke in seitlicher Richtung überragt. Damit können Zusammenstöße des Fördermittels während dessen Fahrt auf dem Betriebsgelände als auch während des Verladevorgangs vermieden werden.

Die Aufgabe der Erfindung wird eigenständig auch durch ein Verfahren zum Verladen von Werkstücken mit einem fahrerlosen Fördermittel und einer Fertigungszelle zum Bearbeiten der Werkstücke emäß Anspruch 8 gelöst, wobei in einer seitlich umlaufenden Schutzabtrennung der Fertigungszelle eine Schleuse ausgebildet ist, und wobei eine Öffnung der Schleuse durch eine erste Lichtschrankenanordnung mit einem ersten Sender und mit einem dem ersten Sender zugeordneten, ersten Empfänger gegen unbefugten Zutritt gesichert ist, und wobei das fahrerlose Fördermittel ein Lastaufnahmemittel umfasst und von einer Steuervorrichtung gesteuert wird. Bei dem Verfahren werden die folgenden Verfahrensschritte durchgeführt. Das fahrerlose Fördermittel wird zu einer Startposition für den Verladevorgang vor der Schleuse der Fertigungszelle bewegt und von der Steuervorrichtung des Fördermittels werden eine zweite Lichtschrankenanordnung und eine dritte Lichtschrankenanordnung aktiviert, wobei von der zweiten Lichtschrankenanordnung und von der dritten Lichtschrankenanordnung das Lastaufnahmemittel und die Werkstücke an einander gegenüberliegenden Seiten seitlich begrenzt werden, und die erste Lichtschrankenanordnung von einer Steuervorrichtung der Schleuse deaktiviert wird, und während der Durchführung des Verladevorgangs die zweite Lichtschrankenanordnung und die dritte Lichtschrankenanordnung von der Steuervorrichtung des Fördermittels und von der Steuervorrichtung der Schleuse überwacht werden. Dadurch wird der Vorteil erzielt, dass der Wechsel von der Überwachung des Fördermittels und der Überwachung der Schleuse - unabhängig voneinander - zu einer Überwachung des gemeinsamen räumlichen Bereichs von Fördermittel und Schleuse in automatisierter Weise erfolgen kann.

In einer vorteilhaften Weiterbildung des Verfahrens ist vorgesehen, dass, wenn von der Steuervorrichtung des Fördermittels eine Unterbrechung der zweiten Lichtschrankenanordnung oder der dritten Lichtschrankenanordnung registriert wird, das Fördermittel angehalten wird. Damit können Zusammenstöße und damit Beschädigungen von Teilen aber vor Allem auch Verletzungen von Bedienpersonen, die sich in der Nähe aufhalten, verhindert werden. Vorteilhaft ist auch, dass, wenn von der Steuervorrichtung des Fördermittels eine Unterbrechung der zweiten Lichtschrankenanordnung oder der dritten Lichtschrankenanordnung registriert wird, ein Detektor des Fördermittels aktiviert wird, wobei durch den Detektor ein Überwachungsbereich, der eine gemeinsame räumliche Ausdehnung des Lastaufnahmemittels und der Werkstücke in seitlicher Richtung überragt, gebildet wird. Dies erlaubt eine automatisiert erfolgende Kontrolle des Überwachungsbereichs hinsichtlich des Vorhandenseins eines hinderlichen Gegenstands oder einer Person und somit auch eine automatische Fortsetzung eines einmal unterbrochenen Verladevorgangs, wenn das Hindernis wieder entfernt wurde.

Die Weiterbildung, wonach, wenn von der Steuervorrichtung der Schleuse eine Unterbrechung der zweiten Lichtschrankenanordnung oder der dritten Lichtschrankenanordnung registriert wird, die erste Lichtschrankenanordnung aktiviert wird, hat den Vorteil, dass in einem Störfall zusätzlich auch überwacht werden kann, ob ein behindernder Gegenstand nicht auch in die Schleuse bzw. in die Abstellzone eindringt.

In vorteilhafter Weise werden bei dem Verfahren von der Steuervorrichtung des Fördermittels und von der Steuervorrichtung der Schleuse die zweite Lichtschrankenanordnung und/oder die dritte Lichtschrankenanordnung zur direkten Übertragung von Nachrichten zwischen dem Fördermittel und der Schleuse verwendet werden. Somit kann die gesamte Kommunikation bzw. der gesamte Daten- und Informationsaustausch zwischen einem Fördermittel und der Schleuse unabhängig von den übergeordneten Steuereinrichtungen erfolgen.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsvorrichtung mit einer Fertigungszelle und einem Fördermittel;
- Fig. 2: ein Detail der Fertigungsvorrichtung gemäß Fig. 1;
- Fig. 3: das Fördermittel in einer Startposition vor der Schleuse der Fertigungszelle zur Durchführung des Verladevorgangs;
- Fig. 4: das Fördermittel vor der Schleuse der Fertigungszelle mit aktivierten seitlichen Lichtschrankenanordnungen;
- Fig. 5: die Fertigungszelle mit dem in die Schleuse eingefahrenen Fördermittel;
- Fig. 6: das Fördermittel vor der Schleuse der Fertigungszelle nach dem Abstellen der Palette bzw. der Werkstücke in der Abstellzone der Schleuse;
- Fig. 7: die Fertigungsvorrichtung mit dem sich von der Fertigungszelle wieder entfernenden Fördermittel;
- Fig. 8: das Fördermittel vor der Schleuse der Fertigungszelle in der Situation eines Störfalls des Verladevorgangs;
- Fig. 9: ein Detail einer alternativen Ausführungsform der Fertigungsvorrichtung mit dem Fördermittel am Beginn eines Verladevorgangs;
- Fig. 10: die Fertigungsvorrichtung gemäß Fig. 9 in der Situation eines Störfalls des Verladevorgangs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

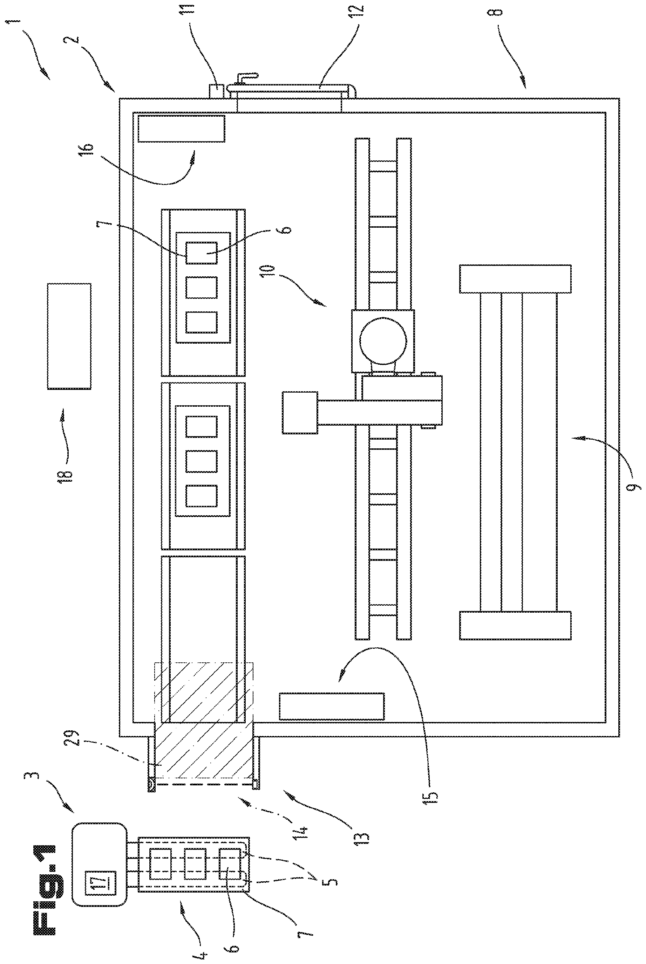

Die Fig. 1 zeigt eine Fertigungsvorrichtung 1 mit einer Fertigungszelle 2 und einem Fördermittel 3.

Die Fertigungsvorrichtung 1 ist in der Fig. 1 in einer Draufsicht von oben gezeigt. Als Fördermittel 3 ist ein sogenanntes flurgebundenes fahrerloses Transportfahrzeug (FTF), das einen eigenen Fahrantrieb (nicht dargestellt) aufweist und so automatisch gesteuert und berührungslos geführt werden kann, vorgesehen. Zum Materialtransport ist das Fördermittel 3 mit einem Lastaufnahmemittel 4 ausgebildet. Gemäß diesem Ausführungsbeispiel ist das Lastaufnahmemittel 4 in Form eines Gabelhubwagens mit zwei Zinken bzw. Gabeln 5 ausgebildet. Mit Hilfe der Gabeln 5 kann das Lastaufnahmemittel 4 mit Werkstücken 6 beladene Paletten 7 aufnehmen und transportieren. Die Fertigungszelle 2 weist eine Schutzabtrennung 8 in Form einer seitlich umlaufenden Begrenzung auf. Die Schutzabtrennung 8 wird gemäß diesem Ausführungsbeispiel durch einen Schutzzaun gebildet. In der Fertigungszelle 2 befindet sich eine Bearbeitungsvorrichtung 9 zur automatisierten Bearbeitung der Werkstücke 6. Dazu ist eine, beispielsweise durch einen Mehrachsroboter gebildete Handhabungseinrichtung 10 vorgesehen, durch die die Werkstücke 6 der Bearbeitungsvorrichtung 9 zugeführt bzw. von dieser nach deren Bearbeitung wieder entnommen werden. Die Bearbeitungsvorrichtung 9 kann beispielsweise durch eine Biegepresse gebildet sein.

In der seitlich umlaufenden Schutzabtrennung 8 ist eine mit einer Sicherheitseinrichtung 11 versehene Tür 12 vorgesehen. Durch diese wird erreicht, dass nur dazu befugte und autorisierte Bedienpersonen die Fertigungszelle 2 betreten können. Andererseits weist die Schutzabtrennung 8 der Fertigungszelle 2 eine Tür bzw. eine Schleuse 13 auf, die dem Werkstücktransfer in die Fertigungszelle 2 hinein bzw. daraus wieder heraus dient. Die Schleuse 13 weist ebenfalls eine Sicherheitseinrichtung auf, mit der ein unbefugter Zutritt in die Fertigungszelle 2 verhindert werden soll. Gemäß diesem Ausführungsbeispiel ist als Sicherheitseinrichtung der Schleuse 13 eine Lichtschrankenanordnung 14 vorgesehen. Die Lichtschrankenanordnung 14 der Schleuse 13 ist ihrerseits mit einer Steuervorrichtung 15 verbunden, durch die ihre Betriebszustände überwacht und gesteuert werden können. Die Steuervorrichtung 15 der Schleuse 13 steht außerdem mit einer Steuervorrichtung 16 der Fertigungszelle 2 in Verbindung. Im Falle, dass eine Person oder irgendein Gegenstand in den Überwachungsbereich der Lichtschrankenanordnung 14 eindringt oder diesen überschreitet, wird dies von der Steuervorrichtung 15 der Schleuse 13 festgestellt und der Steuervorrichtung 16 der Fertigungszelle 2 mitgeteilt. Die Steuervorrichtung 16 der Fertigungszelle 2 kann daraufhin den Betrieb der Bearbeitungsvorrichtung 9 und der Handhabungseinrichtung 10 unterbrechen bzw. gegebenenfalls andere Sicherungsmaßnahmen einleiten.

Das Fördermittel 3 weist ebenfalls eine eigenständige Steuervorrichtung 17 auf, die den programmgesteuerten, automatischen Betrieb des Fördermittels 3 ermöglicht. Dazu zählen die Steuerung der Fahrbewegungen, das Anheben und Abstellen der Paletten 7 mit den Werkstücken 6, die Standortbestimmung und Navigation auf dem Betriebsgelände als auch die Kommunikation mit einer zentralen Steuervorrichtung 18 der Fertigungsvorrichtung 1. Es kann somit ein Austausch von Informationen bzw. von Daten erfolgen, wie er für die Ausführung der Transportaufträge durch das Fördermittels 3 erforderlich ist. Mit Hilfe der Steuervorrichtung 17 des Fördermittels 3 kann dieses auch den zu befahrenden Weg während der Fahrt auf dem Betriebsgelände direkt überwachen.

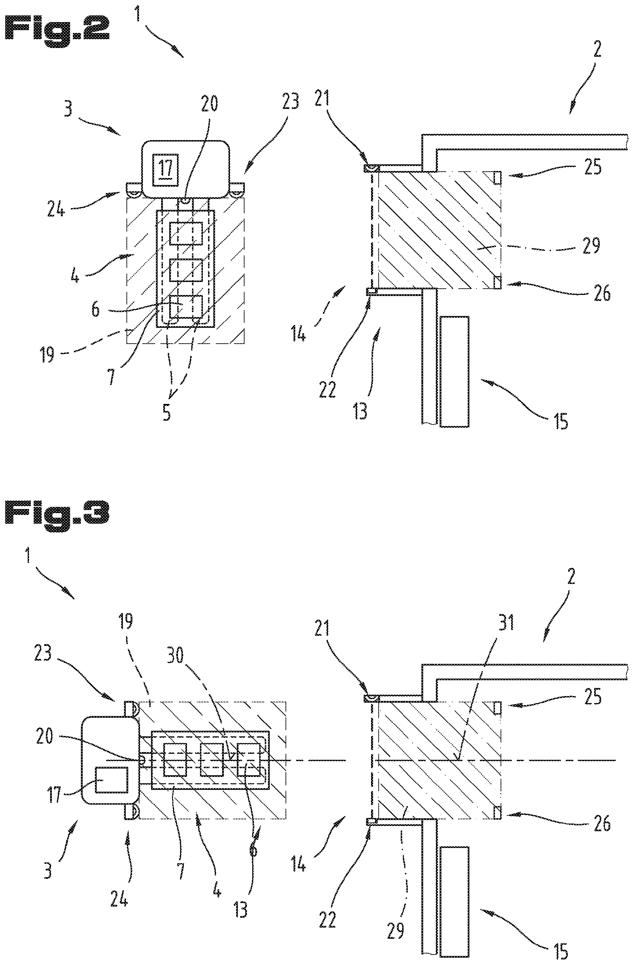

Die Fig. 2 zeigt ein Detail der Fertigungsvorrichtung 1 gemäß Fig. 1. Wie besser an der in Fig. 2 vergrößert dargestellten Anordnung von Teilen der Fertigungsvorrichtung 1 erkennbar ist, weist das Fördermittel 3 ein Schutzfeld bzw. einen Überwachungsbereich 19 auf. Dieser Überwachungsbereich 19 wird durch einen dem Fördermittel 3 eigenen Detektor 20 realisiert. Der Detektor 20 kann beispielsweise durch einen sogenannten Laser-Scanner realisiert sein, mit dessen Hilfe Gegenstände in dem Schutzfeld detektiert werden können. Der Detektor 20 des Fördermittels 3 ist dabei so angeordnet, dass dessen Überwachungsbereich 19 die räumliche Ausdehnung der Gabeln 5 als auch der Palette 7 mit den Werkstücken 6 in seitlicher Richtung überragt. Der Überwachungsbereich 19 bleibt in seiner relativen Anordnung in Bezug auf das Fördermittel 3, so wo wie auch der diesen bestimmende Detektor 20, unverändert. Kommt das Fördermittel 3 bei seiner Fahrt einem hinderlichen Gegenstand zu nahe und wird dieser Gegenstand von dem Detektor 20 als in dem Überwachungsbereich 19 befindlich erkannt, so kann die Steuervorrichtung 17 des Fördermittels 3 das Anhalten oder ein Ausweichmanöver des Fördermittels 3 bewirken, sodass ein Zusammenstoß mit dem behindernden Gegenstand oder mit einer Person verhindert werden kann. Folglich können damit auch Sach- oder Personenschäden vermieden werden.

Der Scanner bzw. Detektor 20 zur Erzeugung des sich mit dem Fördermittel 3 mitbewegenden Überwachungsbereichs 19 kann zusätzlich auch noch in seiner räumlichen Ausdehnung veränderbar sein. Beispielsweise kann der Überwachungsbereich 19 bei Wahl einer höheren Fahrgeschwindigkeit des Fördermittels 3 vergrößert werden, um so einen größeren Sicherheitsabstand zu gewährleisten.

Die Fig. 3 bis 7 zeigen verschiedene Abschnitte bzw. weitere Phasen des Verfahrens zur Lieferung von Werkstücken 6 an die Fertigungszelle 2 mithilfe des Fördermittels 3. Die in Fig. 2 dargestellte Situation bzw. der entsprechende Betriebszustand der Fertigungsvorrichtung 1 entspricht dem Eintreffen des Fördermittels 3 bei der Schleuse 13 der Fertigungszelle 2. Die Steuervorrichtung 17 des Fördermittels 3 hat dazu - der gezeigten Situation vorausgehend - von der Steuervorrichtung 18 der Fertigungsvorrichtung 1 einen Transportauftrag zur Lieferung von Werkstücken 6 an die Fertigungszelle 2 erhalten. In der dargestellten Situation ist der Zugang zu der Schleuse 13 allerdings noch durch die Lichtschrankenanordnung 14 gesperrt.

Diese Lichtschrankenanordnung 14 vor der Schleuse 13 umfasst in an sich bekannter Weise einen ersten Sender 21 und einen ersten Empfänger 22. Diese sind jeweils an einander gegenüberliegenden Seiten der Tür bzw. der Schleuse 13 angeordnet. Der Sender 21 und der Empfänger 22 der Lichtschrankenanordnung 14 sind außerdem so aufeinander ausgerichtet, dass zwischen dem Sender 21 und dem Empfänger 22 ein von dem Sender 21 erzeugter Lichtstrahl aufgebaut bzw. aufrechterhalten werden kann. In dem der Sender 21 und der Empfänger 22 mit der Steuervorrichtung 15 der Schleuse 13 in Verbindung stehen, kann von der Steuervorrichtung 15 eine Unterbrechung des Lichtschranken 14 erkannt werden.

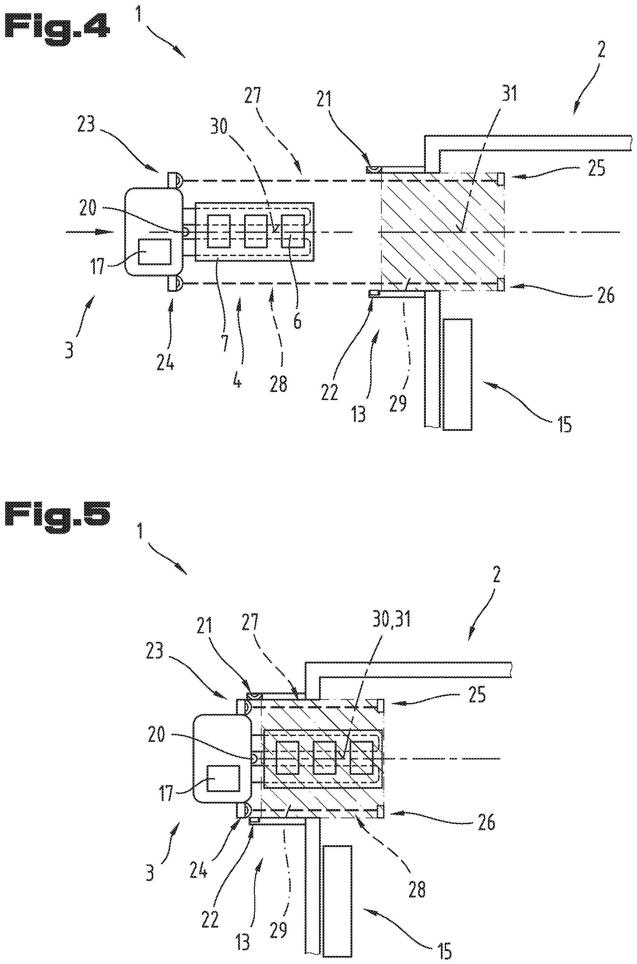

Erfindungsgemäß ist die Fertigungsvorrichtung 1 bzw. sind die Schleuse 13 der Fertigungszelle 2 und das Fördermittel 3 mit weiteren Sendern 23, 24 bzw. Empfängern 25, 26 zum temporären Aufbau von Lichtschrankenanordnungen 27, 28 ausgebildet (Fig. 4).

In der Fig. 3 ist das Fördermittel 3 in einer Startposition für den Ladevorgang der Palette 7 mit den Werkstücken 6 in eine Abstellzone 29 der Schleuse 13 gezeigt. Dabei sind eine Einfahrtsrichtung 30 des Lastaufnahmemittels 4 zu einer Durchgangsrichtung 31 der Schleuse 13 fluchtend zueinander ausgerichtet. Dementsprechend sind der Sender 23 und der Empfänger 25 der zweiten Lichtschrankenanordnung 27 einerseits und der Sender 24 und der Empfänger 26 der dritten Lichtschrankenanordnung 28 andererseits an dem Fördermittel 3 bzw. in der Schleuse 13 positioniert bzw. angeordnet. Das heißt die beiden Sender 23, 24 des Fördermittels 3 sind an diesem seitlich bezüglich der Einfahrtsrichtung 30 des Lastaufnahmemittels 4 angeordnet. Andererseits sind auch die beiden Empfänger 25, 26 der Schleuse 13 seitlich bezüglich der Durchgangsrichtung 31 angeordnet, sodass in einem eingeschalteten bzw. aktivierten Zustand der beiden Lichtschrankenanordnungen 27, 28 diese das Lastaufnahmemittel 4 mit den Werkstücken 6 bzw. mit der Palette 7 seitlich begrenzen. Vorzugsweise ist vorgesehen, dass die beiden Lichtschrankenanordnungen 27, 28 im Wesentlichen parallel zueinander ausgerichtet sind.

In einem aktivierten Zustand der beiden Lichtschrankenanordnungen 27, 28 wird durch diese gemeinsam mit dem Fördermittel 3 eine U-förmige seitliche Begrenzung gebildet. Es wird dadurch ein zusammenhängender räumlicher Bereich, in dessen Inneren sich sowohl die Abstellzone 29 der Schleuse 13 als auch das Lastaufnahmemittel 4 des Fördermittels 3 befinden, zur Seite hin abgesichert bzw. umschlossen (Fig. 4, 5, 6). Die beiden seitlichen Lichtschrankenanordnungen 27, 28 dienen so als eine temporär einsetzbare Sicherungseinrichtung.

Nachdem das Fördermittel 3 seine Startposition vor der Schleuse 13 der Fertigungszelle 2 (gemäß Fig. 3) zur Durchführung des Verladevorgangs eingenommen hat, was von einer integrierten Einrichtung zur Standortbestimmung der Steuervorrichtung 17 des Fördermittels 3 festgestellt werden kann, werden durch die Steuervorrichtung 17 die beiden Lichtschrankenanordnungen 27, 28 aktiviert. Dazu werden die beiden Sender 23, 24 eingeschaltet, sodass Lichtstrahlen auf die jeweiligen Empfänger 25, 26 fallen und von diesen detektiert werden. Die Aktivierung der beiden Lichtschrankenanordnungen 27, 28 kann folglich von der Steuervorrichtung 15 der Schleuse 13 registriert werden, worauf hin durch die Steuervorrichtung 15 der Schleuse 13 die erste Lichtschrankenanordnung 14 vor der Schleuse 13 ausgeschaltet werden kann (Fig. 3, 4). Dies entspricht einer Übergabe bzw. einem Wechsel der Sicherungsfunktion von der ersten Lichtschrankenanordnung 14 vor der Schleuse 13 hin zu den beiden seitlichen Lichtschrankenanordnungen 27, 28. Das bedeutet gleichzeitig eine Ausweitung des abzusichernden räumlichen Bereichs hin zu dem gemeinsamen Bereich von Abstellzone 29 der Schleuse 13 und Lastaufnahmemittel 4 des Fördermittels 3. Im weiteren Verlauf des Ladevorgangs dienen sodann die seitlichen Lichtschrankenanordnungen 27, 28 zur Überwachung bzw. zur Sicherung des ausgeweiteten, gemeinsamen Bereichs (Lastaufnahmemittel 4 und Abstellzone 29).

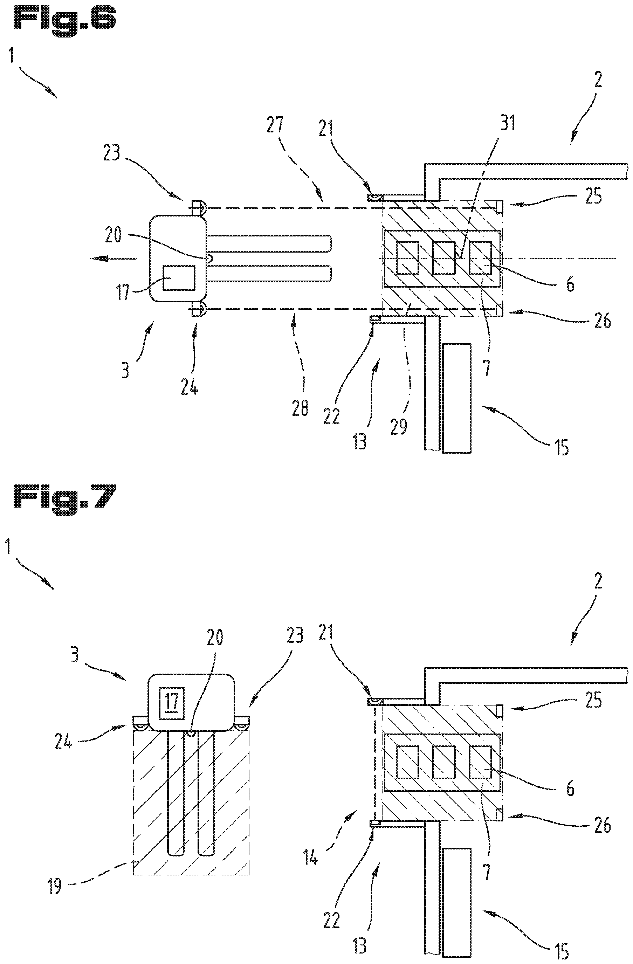

Die danach folgende Phase des Verladevorgangs - nach Aktivierung der Lichtschrankenanordnung 27, 28 - besteht nun darin, dass das Fördermittel 3 mit seinem Lastaufnahmemittel 4 in die Schleuse 13 einfährt (Fig. 5). Durch Absenken der Gabeln 5 des Lastaufnahmemittels 4 kann das Fördermittel 3 sodann die Palette 7 mit den Werkstücken 6 in der Abstellzone 29 absetzen und anschließend aus der Schleuse 13 wieder ausfahren (Fig. 6).

Sobald das Fördermittel 3 seine ursprüngliche Startposition vor der Schleuse 13 wieder erreicht hat, werden von der Steuervorrichtung 17 des Fördermittels 3 die beiden Lichtschrankenanordnungen 27, 28 wieder deaktiviert bzw. ausgeschaltet (Fig. 6, 7). Dies kann von der Steuervorrichtung 15 der Schleuse 13 anhand des Ausbleibens von Signalen von den beiden Empfängern 25, 26 der Schleuse 13 registriert werden, woraufhin die Steuervorrichtung 15 die erste Lichtschrankenanordnung 14 vor der Schleuse 13 wieder einschaltet.

Für den beschriebenen Verladevorgang ist zusätzlich auch noch vorgesehen, dass, wenn das Fördermittel 3 seine Startposition vor der Schleuse 13 erreicht und dort angehalten hat, der Scanner bzw. der Detektor 20 für den Überwachungsbereich 19 des Fördermittel 3 deaktiviert wird (Fig. 3, 4). Andererseits wird nach Beendigung des Verladevorgangs, bevor das Fördermittel 3 die Startposition vor der Schleuse 13 wieder verlässt (Fig. 6), der Detektor 20 wieder eingeschaltet und der Überwachungsbereich 19 wieder aktiviert (Fig. 7).

Während der Dauer, in der die Sicherungsfunktion von den beiden seitlichen Lichtschrankenanordnungen 27, 28 ausgeübt wird (Fig. 4, 5, 6), werden von den beiden Steuervorrichtungen 15, 17 der Schleuse 13 bzw. des Fördermittels 3 Unterbrechungen der Lichtstrahlen der beiden Lichtschrankenanordnungen 27, 28 als das Eindringen bzw. Überschreiten der entsprechenden Grenzen durch einen Gegenstand oder eine Person interpretiert und entsprechende Sicherungsmaßnahmen eingeleitet. Dazu gehört beispielsweise, dass das Fördermittel 3 durch die Steuervorrichtung 17 automatisch angehalten wird. Andererseits kann in einem solchen Fall von der Steuervorrichtung 15 der Schleuse 13 die erste Lichtschrankenanordnung 14 vor der Schleuse 13 (durch Einschalten des ersten Senders 21 und des ersten Empfängers 22) wieder aktiviert werden.

Für einen solchen Fall des Eindringens eines Gegenstands oder einer Person in den durch die beiden Lichtschrankenanordnungen 27, 28 überwachten Bereich ist vorzugsweise auch vorgesehen, dass nach dem Feststellen einer solchen Unterbrechung einer der Lichtschrankenanordnungen 27, 28 der Überwachungsbereich 19 des Fördermittels 3 durch Einschalten des Detektors 20 wieder aktiviert wird. Der unterbrochene Verladevorgang kann daraufhin von der Steuervorrichtung 15 der Fertigungszelle 2 erst dann wieder fortgesetzt werden, wenn aus den von dem Detektor 20 des Überwachungsbereichs 19 des Fördermittels 3 erhaltenen Signalen bzw. Daten festgestellt werden kann, dass der Überwachungsbereich 19 wieder frei von Hindernissen ist. Die dazu erforderlichen Maßnahmen können in automatischer Weise, unter Mitwirkung der Steuervorrichtung 17 des Fördermittels 3 und der Steuervorrichtung 15 der Schleuse 13 durchgeführt werden.

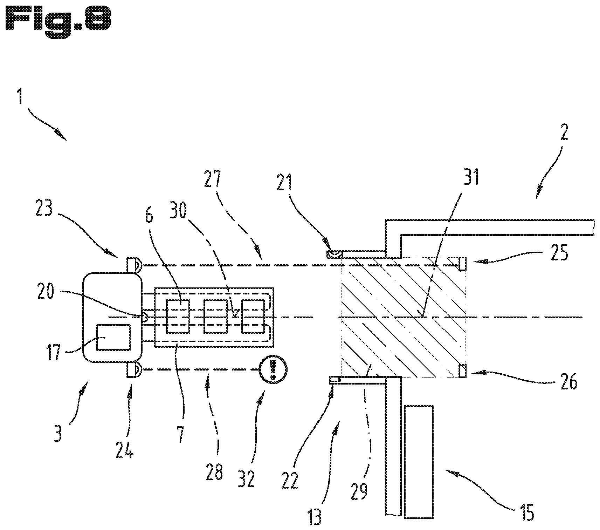

Die Fig. 8 zeigt die Situation einer Unterbrechung eines Verladevorgangs des Fördermittels 3 an der Schleuse 13 der Fertigungszelle 2. Gemäß der Darstellung ist dabei die seitliche Lichtschrankenanordnungen 28 durch eine Person 32 unterbrochen, indem deren Körper den von dem Sender 24 ausgesendeten Lichtstrahl verdeckt. Der Empfänger 26 der Lichtschrankenanordnungen 28 kann dadurch den Lichtstrahl nicht detektieren, was von der Steuervorrichtung 15 der Schleuse 13 als Eintreten einer Störung registriert werden kann.

Die Steuervorrichtung 15 der Schleuse 13 kann sodann eine Meldung bzw. Nachricht generieren, die über die Steuervorrichtung 16 der Fertigungszelle 2 an die zentrale Steuervorrichtung 18 der Fertigungsvorrichtung übertragen wird. Von der zentralen Steuervorrichtung 18 der Fertigungsvorrichtung 1 erhält sodann die Steuervorrichtung 17 des Fördermittels 3 die Mitteilung der Unterbrechung der seitlichen Lichtschrankenanordnung 28 und wird in Reaktion darauf das Fördermittel 3 angehalten. Vorzugsweise erfolgt als eine weitere Reaktion auf die Mitteilung der Unterbrechung der Lichtschrankenanordnung 28 das Einschalten des Detektors 20 für den Überwachungsbereich 19 des Fördermittels 3. Die Fahrbewegung des Fördermittels 3 wird durch deren Steuervorrichtung 17 erst dann wieder fortgesetzt, wenn die Überwachung des Überwachungsbereichs 19 durch den Detektor 20 ergeben hat, dass die Person 32 sich nicht mehr in dem Überwachungsbereich 19 des Fördermittels 3 aufhält. Die Wiederaufnahme der Fahrbewegung des Fördermittels 3 hat außerdem auch zur Voraussetzung, dass von den Empfängern 25, 26 der Schleuse 13 die entsprechenden Lichtstrahlen von den Sendern 23, 24 des Fördermittels 3 wieder empfangen werden (entspricht der Situation wie dargestellt in Fig. 4).

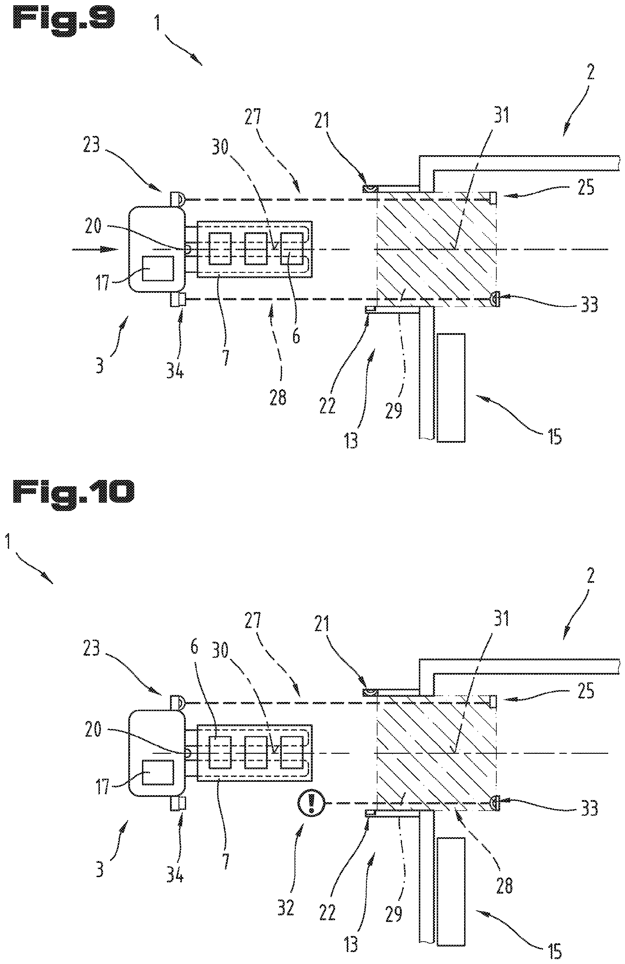

Die Fig. 9 zeigt ein Detail einer alternativen Ausführungsform der Fertigungsvorrichtung 1. Wiederum werden für gleiche Teile gleiche Bezugszeichen bzw. Bauteilbezeichnungen wie in den vorangegangenen Fig. 1 bis 8 verwendet. Um unnötige Wiederholungen zu vermeiden, wird auf die detaillierte Beschreibung in den vorangegangenen Fig. hingewiesen bzw. Bezug genommen.

Bei der Fertigungsvorrichtung 1 gemäß diesem Ausführungsbeispiel sind die beiden zwischen dem Fördermittel 3 und der Fertigungszelle 2 ausgebildeten seitlichen Lichtschrankenanordnungen 27, 28 durch eine alternative Anordnung von Sendern und Empfängern realisiert.

Die linke Lichtschrankenanordnung 27 (links bei einer Betrachtungsrichtung vom Fördermittel 3 auf die Schleuse 13 der Fertigungszelle 2) wird, so wie bei dem Ausführungsbeispiel gemäß den Fig. 2 bis 8, durch den Sender 23 an dem Fördermittel 3 und den Empfänger 25 an der Schleuse 13 gebildet. Zur Ausbildung der rechten Lichtschrankenanordnung 28 ist ein Sender 33 an der Schleuse 13 und ein Empfänger 34 an dem Fördermittel 3 vorgesehen. Das Fördermittel 3 verfügt nun dementsprechend links über den Sender 23 und rechts über den Empfänger 34. Während die Steuervorrichtung 15 der Schleuse 13 mit dem links angeordneten Empfänger 25 und dem rechts angeordneten Sender 33 verbunden ist.

Zusätzlich ist bei der Fertigungsvorrichtung 1 gemäß dieser Ausführungsvariante vorgesehen, dass die beiden seitlichen Lichtschrankenanordnungen 27, 28 auch zur direkten Übertragung von Nachrichten zwischen dem Fördermittel 3 und der Schleuse 13 verwendet werden können. Dazu sind die Steuervorrichtung 17 des Fördermittels 3 bzw. der Sender 23 dazu ausgebildet, dass durch diese dem Lichtstrahl der linken Lichtschrankenanordnung 27 ein codiertes Signal aufmoduliert werden kann, das andererseits von dem Empfänger 25 bzw. der Steuervorrichtung 15 der Schleuse 13 empfangen und decodiert werden kann. In dazu analoger Weise ist auch die Steuervorrichtung 15 der Schleuse 13 mit dem Sender 33 dazu ausgebildet über den Lichtstrahl der rechten Lichtstrahlenanordnung 28 eine Mitteilung an den Empfänger 34 bzw. die Steuervorrichtung 17 des Fördermittels 3 zu übertragen. Auf diese Weise ist eine direkte Kommunikation zwischen dem Fördermittel 3 und der Schleuse 13 der Fertigungszelle 2 möglich, ohne dass dazu ein Nachrichtenaustausch mit der übergeordneten Steuervorrichtung 16 der Fertigungszelle 2 noch mit der zentralen Steuervorrichtung 18 der gesamten Fertigungsvorrichtung 1 erfolgen muss.

Das Verfahren zur Lieferung von Werkstücken 6 an die Fertigungszelle 2 mit Hilfe des Fördermittels 3 gemäß dieser Ausführungsvariante erlaubt die Überprüfung von Betriebszuständen anhand zusätzlicher Kriterien, wobei dieses in direkter Kommunikation zwischen dem Fördermittel 3 und der Schleuse 13 der Fertigungszelle 2 erfolgen kann. In ihrem Grundzustand wird die Steuervorrichtung 15 der Schleuse 13 ihre Lichtschrankenanordnung 14 aktiviert halten und so den Zugang zur Schleuse 13 überwachen. Darüber hinaus braucht die Steuervorrichtung 15 nur den Zustand des Empfängers 25 überwachen, damit im Falle des Eintreffens eines Fördermittels 3 zwischen diesem und der Schleuse 13 der Fertigungszelle 2 eine Kommunikation erfolgen kann.

Ein zur Lieferung von Werkstücken 6 an der Schleuse 13 der Fertigungszelle 2 eintreffendes Fördermittel 3 wird zunächst vor der Schleuse 13 eine Startposition für den Verladevorgang einnehmen, in der die Einfahrtsrichtung 30 des Lastaufnahmemittels 4 bzw. des Fördermittels 3 fluchtend zu der Durchgangsrichtung 31 der Schleuse 13 ausgerichtet ist. Sobald das Fördermittel 3 diese Startposition für den Ladevorgang eingenommen hat, wird die Steuervorrichtung 17 des Fördermittels 3 durch Aktivierung des linksseitig angeordneten Senders 23 der seitlichen Lichtschrankenanordnung 27 diese einschalten und damit - und durch Detektion des Lichtstrahls vom Empfänger 25 - eine Verbindung zu der Schleuse 13 bzw. deren Steuervorrichtung 15 herstellen. In Reaktion darauf kann die Steuervorrichtung 15 der Schleuse 13 die rechte Lichtstrahlenanordnung 28 durch Aktivieren des Senders 33, mit dem seinerseits ein Lichtstrahl auf den Empfänger 34 an dem Fördermittel 3 gerichtet wird, aktivieren. Die Detektion des Lichtstrahls an dem Empfänger 34 des Fördermittels 3 gibt dessen Steuervorrichtung 17 schließlich die Information, dass der Ladevorgang nun tatsächlich ausgeführt werden kann. Dieses beiderseitige Feststellen der Bereitschaft für den Verladevorgang ist auch Voraussetzung dafür, dass von der Steuervorrichtung 15 der Schleuse 13 die Lichtschrankenanordnung 14 und andererseits von der Steuervorrichtung 17 des Fördermittels 3 der Detektor 20 für den Überwachungsbereich 19 deaktiviert werden kann. Schließlich wird von der Steuervorrichtung 17 das Fördermittel 3 zur Einfahrt in die Schleuse 13 in Bewegung gesetzt.

Während des weiteren Verlaufs des Verladevorgangs erfolgt durch die beiden seitlichen Lichtschrankenanordnungen 27, 28 die Überwachung eines erweiterten zusammenhängenden räumlichen Bereichs, der sowohl das Lastaufnahmemittel 4 mit der Gabel 5 und der Palette 7 mit den Werkstücken 6 als auch die Abstellzone 29 in der Schleuse 13 einschließt. Eine Unterbrechung eines der beiden Lichtstrahlen der seitlichen Lichtschrankenanordnungen 27, 28 wird von den Steuervorrichtungen 15, 17 des Fördermittels 3 und der Schleuse 13 als das Eintreten eines Störfalls erkannt und können von den beiden Steuervorrichtungen 15, 17 in direkter Kommunikation miteinander Notmaßnahmen eingeleitet werden.

Die Fig. 10 zeigt eine Situation einer Störung bzw. Unterbrechung des Verladevorgangs des Fördermittels 3 an der Schleuse 13 der Fertigungszelle 2. In der dargestellten Situation ist der Körper einer Person 32 dem erweiterten Überwachungsbereich so nahe gekommen, dass der Lichtstrahl der rechten Lichtstrahlenanordnung 28, zwischen dem Sender 33 der Schleuse 13 und dem Empfänger 34 des Fördermittels 3, unterbrochen ist. Von der Steuervorrichtung 17 des Fördermittels 3 wird somit ein Fehlen eines Signals von dem Empfänger 34 registriert und das Fördermittel 3 angehalten. Gleichzeitig kann die Steuervorrichtung 17 eine entsprechende Meldung, die über die linke Lichtschrankenanordnung 27 an die Steuervorrichtung 15 der Schleuse 13 übertragen wird, generieren. Neben dem Anhalten des Fördermittels 3 können von der Steuervorrichtung 15 der Schleuse 13 als weitere Schutzmaßnahme das Wiedereinschalten der Lichtschrankenanordnung 14 vor der Schleuse 13 und von der Steuervorrichtung 17 des Fördermittels 3 das Einschalten des Detektors 20 zur Aktivierung des Überwachungsbereichs 19 vorgenommen werden.

Im Übrigen kann die Wiederaufnahme bzw. die Fortsetzung des Verladevorgangs nach einem solchen Störfall ebenfalls in automatisierter Weise erfolgen. Wird nämlich von der Steuervorrichtung 17 des Fördermittels 3 festgestellt, dass die Person 32 bzw. ein sonstiger störender Gegenstand sich nicht mehr in dem Überwachungsbereich 19 befinden, so kann dieser Umstand auch der Steuervorrichtung 15 der Schleuse 13 mitgeteilt werden. In weiterer Folge kann - nach Deaktivierung des Detektors 20 des Fördermittels 3 und Wiederausschalten der Lichtschrankenanordnung 14 vor der Schleuse 13 - das Fördermittel 3 wieder in Gang gesetzt und so der Verladevorgang fortgesetzt.

Als eine besonders streng gehandhabte Sicherungsmaßnahme ist insbesondere vorgesehen, dass während der gesamten Dauer, d.h. ab dem Eintreten der Störung bis zum Feststellen, dass kein störender Gegenstand oder keine störende Person mehr vorhanden ist, eine Überwachung des Überwachungsbereichs 19 durch den Detektor 20 als auch eine Überwachung des Zutritts zu der Schleuse 13 durch die Lichtschrankenanordnung 14 erfolgt. Nur dann darf ein automatisch gesteuerter Wiederanlauf des Verladevorgangs durchgeführt werden.

Wenn sodann - nach Abstellen der Palette 7 mit den Werkstücken 6 - das Fördermittel 3 wieder aus der Abstellzone 29 bzw. wieder aus der Schleuse 13 ausgefahren ist, so wird die Steuervorrichtung 15 der Schleuse 13 darüber von der Steuervorrichtung 17 des Fördermittels 3 informiert. Die Steuervorrichtungen 15, 17 der Schleuse 13 einerseits und des Fördermittels 3 andererseits können damit das Ende des Verladevorgangs erkennen. Daraufhin können die beiden seitlichen Lichtschrankenanordnungen 27, 28 deaktiviert, die Lichtschrankenanordnung 14 vor der Schleuse 13 aktiviert und auch der Detektor 20 des Fördermittels 3 wieder eingeschaltet werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsvorrichtung | 31 | Durchgangsrichtung |
| 2 | Fertigungszelle | 32 | Person |
| 3 | Fördermittel | 33 | Sender |
| 4 | Lastaufnahmemittel | 34 | Empfänger |
| 5 | Gabel | | |
| 6 | Werkstück | | |
| 7 | Palette | | |
| 8 | Schutzabtrennung | | |
| 9 | Bearbeitungsvorrichtung | | |
| 10 | Handhabungseinrichtung | | |
| 11 | Sicherheitseinrichtung | | |
| 12 | Tür | | |
| 13 | Schleuse | | |
| 14 | Lichtschrankenanordnung | | |
| 15 | Steuervorrichtung | | |
| 16 | Steuervorrichtung | | |
| 17 | Steuervorrichtung | | |
| 18 | Steuervorrichtung | | |
| 19 | Überwachungsbereich | | |
| 20 | Detektor | | |
| 21 | Sender | | |
| 22 | Empfänger | | |
| 23 | Empfänger | | |
| 24 | Sender | | |
| 25 | Empfänger | | |
| 26 | Empfänger | | |
| 27 | Lichtschrankenanordnung | | |
| 28 | Lichtschrankenanordnung | | |
| 29 | Abstellzone | | |
| 30 | Einfahrtrichtung | | |

## Patentansprüche

1. Fertigungsvorrichtung (1) mit einer Fertigungszelle (2) zum Bearbeiten von Werkstücken (6), mit einer seitlich umlaufenden, eine Begrenzung der Fertigungszelle (2) bildenden Schutzabtrennung (8), wobei in der Schutzabtrennung (8) eine Schleuse (13) zur Durchführung eines Verladevorgangs der Werkstücke (6) ausgebildet ist, und wobei an einer Öffnung der Schleuse (13) eine erste Lichtschrankenanordnung (14) mit einem ersten Sender (21) und mit einem dem ersten Sender (21) zugeordneten, ersten Empfänger (22) ausgebildet ist, und mit einem fahrerlosen Fördermittel (3) mit einem Lastaufnahmemittel (4) zur Beförderung der Werkstücke (6), **dadurch gekennzeichnet, dass** zur Durchführung des Verladevorgangs zwischen dem Fördermittel (3) und der Schleuse (13) eine zweite Lichtschrankenanordnung (27) und eine dritte Lichtschrankenanordnung (28) ausgebildet sind, sodass das Lastaufnahmemittel (4) und die Werkstücke (6) von der zweiten Lichtschrankenanordnung (27) und von der dritten Lichtschrankenanordnung (28) an einander gegenüberliegenden Seiten seitlich begrenzt sind, und dass die zweite Lichtschrankenanordnung (27) einen zweiten Sender (23), der an dem Fördermittel (3) befestigt ist, und einen zweiten Empfänger (25), der an der Schleuse (13) befestigt ist, umfasst, und dass die dritte Lichtschrankenanordnung (28) einen dritten Sender (33), der an der Schleuse (13) befestigt ist, und einen dritten Empfänger (32), der an dem Fördermittel (3) befestigt ist, umfasst.

2. Fertigungsvorrichtung (1) nach Anspruch 1, **dadurch gekennzeichnet, dass** während der Durchführung des Verladevorgangs ein mit einer Abstellzone (29) der Schleuse (13) für die Werkstücke (6) zusammenhängender Bereich von dem Fördermittel (3), von der zweiten Lichtschrankenanordnung (27) und von der dritten Lichtschrankenanordnung (28) seitlich begrenzt ist.

3. Fertigungsvorrichtung (1) nach Anspruch 1 oder 2, **dadurch gekennzeichnet, dass** das Fördermittel (3) eine Steuervorrichtung (17) umfasst, wobei die Steuervorrichtung (17) dazu ausgebildet ist, die zweite Lichtschrankenanordnung (27) und/oder die dritte Lichtschrankenanordnung (28) bedarfsweise, programmgesteuert zu aktivieren und zu deaktivieren.

4. Fertigungsvorrichtung (1) nach einem der vorhergehenden Ansprüche, **dadurch gekennzeichnet, dass** die Schleuse (13) eine Steuervorrichtung (15) umfasst, wobei die Steuervorrichtung (15) dazu ausgebildet ist, die erste Lichtschrankenanordnung (14) vor der Schleuse (13) bedarfsweise, programmgesteuert zu aktivieren und zu deaktivieren.

5. Fertigungsvorrichtung (1) nach einem der vorhergehenden Ansprüche, **dadurch gekennzeichnet, dass** die Steuervorrichtung (17) des Fördermittels (3) und die Steuervorrichtung (15) der Schleuse (13) dazu ausgebildet sind, gemeinsam die zweite Lichtschrankenanordnung (27) und die dritte Lichtschrankenanordnung (28) programmgesteuert zu überwachen.

6. Fertigungsvorrichtung (1) nach einem der vorhergehenden Ansprüche, **dadurch gekennzeichnet, dass** die zweite Lichtschrankenanordnung (27) zur Übertragung einer Nachricht von der Steuervorrichtung (17) des Fördermittels (3) an die Steuervorrichtung (15) der Schleuse (13) ausgebildet ist, und dass die dritte Lichtschrankenanordnung (28) zur Übertragung einer Nachricht von der Steuervorrichtung (15) der Schleuse (13) an die Steuervorrichtung (17) des Fördermittels (3) ausgebildet ist.

7. Fertigungsvorrichtung (1) nach einem der vorhergehenden Ansprüche, **dadurch gekennzeichnet, dass** das Fördermittel (3) einen Detektor (20) zur Ausbildung eines Überwachungsbereichs (19) umfasst, wobei der Überwachungsbereich (19) eine gemeinsame räumliche Ausdehnung des Lastaufnahmemittels (4) und der Werkstücke (6) in seitlicher Richtung überragt.

8. Verfahren zum Verladen von Werkstücken (6) mit einem fahrerlosen Fördermittel (3) und einer Fertigungszelle (2) zum Bearbeiten der Werkstücke (6), wobei in einer seitlich umlaufenden Schutzabtrennung (8) der Fertigungszelle (2) eine Schleuse (13) ausgebildet ist, und wobei eine Öffnung der Schleuse (13) durch eine erste Lichtschrankenanordnung (14) mit einem ersten Sender (21) und mit einem dem ersten Sender (21) zugeordneten, ersten Empfänger (22) gegen unbefugten Zutritt gesichert ist, und wobei das fahrerlose Fördermittel (3) ein Lastaufnahmemittel (4) umfasst und von einer Steuervorrichtung (17) gesteuert wird, **dadurch gekennzeichnet, dass**
- das fahrerlose Fördermittel (3) zu einer Startposition für den Verladevorgang vor der Schleuse (13) der Fertigungszelle (2) bewegt wird;
- und von der Steuervorrichtung (17) des Fördermittels (3) eine zweite Lichtschrankenanordnung (27) und eine dritte Lichtschrankenanordnung (28) aktiviert werden, wobei von der zweiten Lichtschrankenanordnung (27) und von der dritten Lichtschrankenanordnung (28) das Lastaufnahmemittel (4) und die Werkstücke (6) an einander gegenüberliegenden Seiten seitlich begrenzt werden, und wobei die zweite Lichtschrankenanordnung (27) einen zweiten Sender (23), der an dem Fördermittel (3) befestigt ist, und einen zweiten Empfänger (25), der an der Schleuse (13) befestigt ist, umfasst, und wobei die dritte Lichtschrankenanordnung (28) einen dritten Sender (33), der an der Schleuse (13) befestigt ist, und einen dritten Empfänger (32), der an dem Fördermittel (3) befestigt ist, umfasst;
- und die erste Lichtschrankenanordnung (14) von einer Steuervorrichtung (15) der Schleuse (13) deaktiviert wird;
- und während der Durchführung des Verladevorgangs die zweite Lichtschrankenanordnung (27) und die dritte Lichtschrankenanordnung (28) von der Steuervorrichtung (17) des Fördermittels (3) und von der Steuervorrichtung (15) der Schleuse (13) überwacht werden.

9. Verfahren nach Anspruch 8, **dadurch gekennzeichnet, dass** in der Startposition eine Einfahrtsrichtung (30) des Fördermittels (3) in Bezug auf eine Durchgangsrichtung (31) der Schleuse (13) fluchtend ausgerichtet wird.

10. Verfahren nach Anspruch 8 oder 9, **dadurch gekennzeichnet, dass**, wenn von der Steuervorrichtung (17) des Fördermittels (3) eine Unterbrechung der zweiten Lichtschrankenanordnung (27) oder der dritten Lichtschrankenanordnung (28) registriert wird, das Fördermittel (3) angehalten wird.

11. Verfahren nach einem der Ansprüche 8 bis 10, **dadurch gekennzeichnet, dass**, wenn von der Steuervorrichtung (17) des Fördermittels (3) eine Unterbrechung der zweiten Lichtschrankenanordnung (27) oder der dritten Lichtschrankenanordnung (28) registriert wird, ein Detektor (20) des Fördermittels (3) aktiviert wird, wobei durch den Detektor (20) ein Überwachungsbereich (19), der eine gemeinsame räumliche Ausdehnung des Lastaufnahmemittels (4) und der Werkstücke (6) in seitlicher Richtung überragt, gebildet wird.

12. Verfahren nach einem der Ansprüche 8 bis 11, **dadurch gekennzeichnet, dass**, wenn von der Steuervorrichtung (15) der Schleuse (13) eine Unterbrechung der zweiten Lichtschrankenanordnung (27) oder der dritten Lichtschrankenanordnung (28) registriert wird, die erste Lichtschrankenanordnung (14) aktiviert wird.

13. Verfahren nach einem der Ansprüche 8 bis 12, **dadurch gekennzeichnet, dass** von der Steuervorrichtung (17) des Fördermittels (3) und von der Steuervorrichtung (15) der Schleuse (13) die zweite Lichtschrankenanordnung (27) und/oder die dritte Lichtschrankenanordnung (28) zur direkten Übertragung von Nachrichten zwischen dem Fördermittel (3) und der Schleuse (13) verwendet werden.

## Claims

1. A manufacturing device (1) having a manufacturing cell (2) for processing workpieces (6), with a laterally circumferential safety partition (8) forming a boundary of the manufacturing cell (2), wherein a lock (13) is formed in the safety partition (8) for performing a loading operation of the workpieces (6), and wherein a first light barrier arrangement (14) with a first transmitter (21) and with a first receiver (22) assigned to the first transmitter (21) is formed at an opening of the lock (13), and with a driverless conveying means (3) with a load receiving means (4) for conveying the workpieces (6), **characterized in that** for performing the loading operation, a second light barrier arrangement (27) and a third light barrier arrangement (28) are formed between the conveying means (3) and the lock (13), so that the load receiving means (4) and the workpieces (6) are laterally bounded on opposite sides by the second light barrier arrangement (27) and by the third light barrier arrangement (28), and that the second light barrier arrangement (27) comprises a second transmitter (23), which is fastened to the conveying means (3), and a second receiver (25), which is fastened to the lock (13), and that the third light barrier arrangement (28) comprises a third transmitter (33), which is fastened to the lock (13), and a third receiver (32), which is fastened to the conveying means (3).

2. The manufacturing device (1) according to claim 1, **characterized in that** during the execution of the loading operation, a region connected to a parking zone (29) of the lock (13) for the workpieces (6) is laterally bounded by the conveying means (3), by the second light barrier arrangement (27) and by the third light barrier arrangement (28).

3. The manufacturing device (1) according to claim 1 or 2, **characterized in that** the conveying means (3) comprises a controller (17), wherein the controller (17) is designed to activate and to deactivate the second light barrier arrangement (27) and/or the third light barrier arrangement (28) as needed in a program-controlled manner.

4. The manufacturing device (1) according to one of the preceding claims, **characterized in that** the lock (13) comprises a controller (15), wherein the controller (15) is designed to activate and to deactivate the second light barrier arrangement (14) in front of the lock (13) as needed in a program-controlled manner.

5. The manufacturing device (1) according to one of the preceding claims, **characterized in that** the controller (17) of the conveying means (3) and the controller (15) of the lock (13) are designed to jointly observe the second light barrier arrangement (27) and the third light barrier arrangement (28) in a program-controlled manner.

6. The manufacturing device (1) according to one of the preceding claims, **characterized in that** the second light barrier arrangement (27) is designed to transmit a message from the controller (17) of the conveying means (3) to the controller (15) of the lock (13), and that the third light barrier arrangement (28) is designed to transmit a message from the controller (15) of the lock (13) to the controller (17) of the conveying means (3).

7. The manufacturing device (1) according to one of the preceding claims, **characterized in that** the conveying means (3) comprises a detector (20) for forming an observation region (19), wherein the observation region (19) extends beyond a joint spatial extension of the load receiving means (4) and the workpieces (6) in the lateral direction.

8. A method for loading workpieces (6) with a driverless conveying means (3) and a manufacturing cell (2) for processing the workpieces (6), wherein a lock (13) is formed in a laterally circumferential safety partition (8) of the manufacturing cell (2), and wherein an opening of the lock (13) is secured against unauthorized access by means of a first light barrier arrangement (14) with a first transmitter (21) and with a first receiver (22) assigned to the first transmitter (21), and wherein the driverless conveying means (3) comprises a load receiving means (4) and is controlled by a controller (17), **characterized in that**
- the driverless conveying means (3) is moved to a starting position for the loading operation in front of the lock (13) of the manufacturing cell (2); - and a second light barrier arrangement (27) and a third light barrier arrangement (28) are activated by the controller (17) of the conveying means (3), wherein the load receiving means (4) and the workpieces (6) are laterally bounded on opposite sides by the second light barrier arrangement (27) and by the third light barrier arrangement (28), and wherein the second light barrier arrangement (27) comprises a second transmitter (23), which is fastened to the conveying means (3), and a second receiver (25), which is fastened to the lock (13), and wherein the third light barrier arrangement (28) comprises a third transmitter (33), which is fastened to the lock (13), and a third receiver (32), which is fastened to the conveying means (3);
- and the first light barrier arrangement (14) is deactivated by a controller (15) of the lock (13);
- and the second light barrier arrangement (27) and the third light barrier arrangement (28) are observed by the controller (17) of the conveying means (3) and by the controller (15) of the lock (13) during the execution of the loading operation.

9. The method according to claim 8, **characterized in that** in the starting position, a direction of entry (30) of the conveying means (3) is oriented so as to be aligned with a direction of passage (31) of the lock (13).

10. The method according to claim 8 or 9, **characterized in that**, if the controller (17) of the conveying means (3) registers an interruption of the second light barrier arrangement (27) or the third light barrier arrangement (28), the conveying means (3) is stopped.

11. The method according to one of claims 8 to 10, **characterized in that**, if the controller (17) of the conveying means (3) registers an interruption of the second light barrier arrangement (27) or the third light barrier arrangement (28), a detector (20) of the conveying means (3) is activated, wherein the detector (20) forms an observation region (19) extending beyond a joint spatial extension of the load receiving means (4) and the workpieces (6) in the lateral direction.

12. The method according to claim 8 to 11, **characterized in that**, if the controller (15) of the lock (13) registers an interruption of the second light barrier arrangement (27) or the third light barrier arrangement (28), the first light barrier arrangement (14) is activated.

13. The method according to one of claims 8 to 12, **characterized in that** the second light barrier arrangement (27) and/or the third light barrier arrangement (28) are used by the controller (17) of the conveying means (3) and by the controller (15) of the lock (13) for directly transmitting messages between the conveying means (3) and the lock (13).

## Revendications

1. Dispositif de fabrication (1) avec une cellule de fabrication (2) pour l'usinage de pièces (6), avec une cloison de protection (8) s'étendant latéralement et constituant une délimitation de la cellule de fabrication (2), dans lequel, dans la cloison de protection (8), est réalisé un sas (13) pour l'exécution d'un processus de chargement des pièces (6), et dans lequel, au niveau d'une ouverture du sas (13), est disposé un système de barrière photoélectrique (14) avec un premier émetteur (21) et avec un premier récepteur (22) correspondant au premier émetteur (21), et avec un moyen de transport sans conducteur (3) avec un premier moyen de support de charge (4) pour le transport des pièces (6), **caractérisé en ce que**, pour l'exécution du processus de chargement entre le moyen de transport (3) et le sas (13), sont prévus un deuxième système de barrière photoélectrique (27) et un troisième système de barrière photoélectrique (28), de façon à ce que le moyen de support de charge (4) et les pièces (6) soient limités latéralement, sur des côtés opposés entre eux, par le deuxième système de barrière photoélectrique (27) et par le troisième système de barrière photoélectrique (28) et **en ce que** le deuxième système de barrière photoélectrique (27) comprend un deuxième émetteur (23), qui est fixé au moyen de transport (3), et un deuxième récepteur (25), qui est fixé au sas (13), et **en ce que** le troisième système de barrière photoélectrique (28) comprend un troisième émetteur (33), qui est fixé au sas (13), et un troisième récepteur (32), qui est fixé au moyen de transport (3).

2. Dispositif de fabrication (1) selon la revendication 1, **caractérisé en ce que**, pendant l'exécution du processus de chargement, une zone, cohérente avec une zone de dépôt (29) du sas (13) pour les pièces (6), est délimitée latéralement par le moyen de transport (3), le deuxième système de barrière photoélectrique (27) et le troisième système de barrière photoélectrique (28).

3. Dispositif de fabrication (1) selon la revendication 1 ou 2, **caractérisé en ce que** le moyen de transport (3) comprend un dispositif de commande (17), dans lequel le dispositif de commande (17) est conçu pour activer et désactiver, si nécessaire, à l'aide d'un programme, le deuxième système de barrière photoélectrique (27) et/ou le troisième système de barrière photoélectrique (28).

4. Dispositif de fabrication (1) selon l'une des revendications précédentes, **caractérisé en ce que** le sas (13) comprend un dispositif de commande (15), dans lequel le dispositif de commande (15) est conçu pour activer et désactiver, si nécessaire, à l'aide d'un programme, le premier système de barrière photoélectrique (14) devant le sas (13).

5. Dispositif de fabrication (1) selon l'une des revendications précédentes, **caractérisé en ce que** le dispositif de commande (17) du moyen de transport (3) et le dispositif de commande (15) du sas (13) sont conçus pour surveiller conjointement, à l'aide d'un programme, le deuxième système de barrière photoélectrique (27) et le troisième système de barrière photoélectrique (28).

6. Dispositif de fabrication (1) selon l'une des revendications précédentes, **caractérisé en ce que** le deuxième système de barrière photoélectrique (27) est conçu pour la transmission d'un message du dispositif de commande (17) du moyen de transport (3) au dispositif de commande (15) du sas (13), et **en ce que** le troisième système de barrière photoélectrique (28) est conçu pour la transmission d'un message du dispositif de commande (15) du sas (13) au dispositif de commande (17) du moyen de transport (3).

7. Dispositif de fabrication (1) selon l'une des revendications précédentes, **caractérisé en ce que** le moyen de transport (3) comprend un détecteur (20) pour la formation d'une zone de surveillance (19), dans lequel la zone de surveillance (19) dépassant dans la direction latérale d'une extension spatiale commune du moyen de support de charge (4) et des pièces (6).

8. Procédé de chargement de pièces (6) avec un moyen de transport sans conducteur (3) et une cellule de fabrication (2) pour l'usinage des pièces (6), dans lequel, dans une cloison de protection (8) de la cellule de fabrication (2), est réalisé un sas (13) et dans lequel une ouverture du sas (13) est sécurisée contre un accès non autorisé par un premier système de barrière photoélectrique (14) avec un premier émetteur (21) et avec un premier récepteur (22) correspondant au premier émetteur (21) et dans lequel le moyen de transport sans conducteur (3) comprend un moyen de support de charge (4) et est contrôlé par un dispositif de commande (17),
**caractérisé en ce que**
- le moyen de transport sans conducteur (3) est déplacé vers une position de démarrage pour le processus de chargement devant le sas (13) de la cellule de fabrication (2) ;
- et le dispositif de commande (17) du moyen de transport (3) active un deuxième système de barrière photoélectrique (27) et un troisième système de barrière photoélectrique (28), dans lequel le deuxième système de barrière photoélectrique (27) et le troisième système de barrière photoélectrique (28) limitent latéralement le moyen de support de charge (4) et les pièces (6) sur des côtés opposés entre eux et dans lequel le deuxième système de barrière photoélectrique (27) comprend un deuxième émetteur (23), qui est fixé au moyen de transport (3), et un deuxième récepteur (25), qui est fixé au sas (13), et dans lequel le troisième système de barrière photoélectrique (28) comprend un troisième émetteur (33), qui est fixé au sas (13), et un troisième récepteur (32), qui est fixé au moyen de transport (3) ;
- et le premier système de barrière photoélectrique (14) est désactivé par un dispositif de commande (15) du sas (13) ;
- et, pendant l'exécution du processus de chargement, le deuxième système de barrière photoélectrique (27) et le troisième système de barrière photoélectrique (28) sont surveillés par le dispositif de commande (17) du moyen de transport (3) et par le dispositif de commande (15) du sas (13).

9. Procédé selon la revendication 8, **caractérisé en ce que**, dans la position de démarrage, une direction d'entrée (30) du moyen de transport (3) est alignée avec une direction de passage (31) du sas (13).

10. Procédé selon la revendication 8 ou 9, **caractérisé en ce que**, lorsque le dispositif de commande (17) du moyen de transport (3) enregistre une interruption du deuxième système de barrière photoélectrique (27) ou du troisième système de barrière photoélectrique (28), le moyen de transport (3) est arrêté.

11. Procédé selon l'une des revendications 8 à 10, **caractérisé en ce que**, lorsque le dispositif de commande (17) du moyen de transport (3) enregistre une interruption du deuxième système de barrière photoélectrique (27) ou du troisième système de barrière photoélectrique (28), un détecteur (20) du moyen de transport (3), dans lequel le détecteur (20) forme une zone de surveillance (19) qui dépasse, dans la direction latérale, d'une extension spatiale commune du moyen de support de charge (4) et des pièces (6).

12. Procédé selon l'une des revendications 8 à 11, **caractérisé en ce que**, lorsque le dispositif de commande (15) du sas (13) enregistre une interruption du deuxième système de barrière photoélectrique (27) ou du troisième système de barrière photoélectrique (28), le premier système de barrière photoélectrique (14) est activé.

13. Procédé selon l'une des revendications 8 à 12, **caractérisé en ce que**, lorsque le dispositif de commande (17) du moyen de transport (3) ou le dispositif de commande (15) du sas (13) utilise le deuxième système de barrière photoélectrique (27) et/ou le troisième système de barrière photoélectrique (28) pour une transmission directe de messages entre le moyen de transport (3) et le sas (13).
